# EUROPEAN PATENT SPECIFICATION

(11) **EP 3 906 185 B1**
(45) Date of publication and mention of the grant of the patent: **01.07.2026**
(21) Application number: 19907645.6
(22) Date of filing: 14.12.2019
(51) Int. Cl.: B62J 11/19, B62J 43/16, B62J 43/20, B62K 11/04, B62M 7/12, B60K 1/04, B60L 50/60

(54) **SEPARATE WIRE HARNESS ARRANGEMENT FOR HIGH AND LOW VOLTAGE**
GETRENNTE KABELBAUMANORDNUNG FÜR HOCH- UND NIEDERSPANNUNG
AGENCEMENT DE FAISCEAU ÉLECTRIQUE SÉPARÉ POUR HAUTE ET BASSE TENSION

(30) Priority: 02.01.2019 IN 201941000162
(43) Date of publication of application: 10.11.2021
(73) Proprietor: TVS Motor Company Limited, Chennai 600006 (IN)
(72) Inventor: SUBRAMONIAM, Chithambaram, Chennai 600 006 (IN); MAZUMDAR, Dipanjan, Chennai 600 006 (IN); MADAN MOHAN SINGH, Amar Deep Kumar, Chennai 600 006 (IN); GANGALAKSHMI, Saravanan, Chennai 600 006 (IN); RAMYA, Ganesan, Chennai 600 006 (IN); MUTHUPANDI, Muthuramalingam, Chennai 600 006 (IN); DINESH KUMAR, Sivagurunathan, Chennai 600 006 (IN)
(74) Representative: Patentanwaltskanzlei Matschnig & Forsthuber OG
(86) International application number: PCT/IN2019/050918
(87) International publication number: WO 2020/141542

(56) References cited:
- EP-A1- 2 423 087
- EP-B1- 1 738 947
- CN-A- 106 005 129
- CN-B- 102 612 461
- JP-B2- 4 401 286
- JP-B2- S5 811 502
- US-A1- 2013 257 374
- US-B2- 9 070 925

## Description

### TECHNICAL FIELD

The present invention relates generally to a saddle type two & three-wheeled vehicle. More particularly, the present invention relates to a wire harness system of said saddle type vehicle.

### BACKGROUND

The wiring system for conventionally styled motorcycle is relatively simple. Over the years, although, the configuration of the bike has undergone changes the wiring system has primarily remained the same. With several wires running from one end to another end the manufacturers, generally, wraps the wires into a bunch and then tape them together with an insulation tape or with cloth or a plastic material. This not only provides insulation to wire but also protects them from any kind of wear and tear in addition to enabling ease of assembly & manufacturing of the vehicle leading to shorter time of assembly. Other alternatives for the wire insulation are plastic flexi tube which is commonly used in autos. US 2013/0257374 A1 discloses a saddle type vehicle according to the preamble of claim 1. EP 2423087 A1 describes an electric vehicle using batteries as power source. CN 102612461B suggests to separate the routing of high and low voltage wiring in an electric saddle type vehicle to avoid noise from the high voltage wiring reaching the low voltage wiring. EP 1738947B1 discloses a saddle type hybrid vehicle having a charging socket near the head tube.

Wire harness in a conventional vehicle provided with internal combustion engine drive system are divided into different arrangements such as instrument panel, an engine harness. If it is a hybrid electric vehicle, the system consists of a battery, a drive motor which is driven by the battery, an inverter installed along with the conventional internal combustion engine drive system. The wire harness is generally installed together with the existing wire harness system.

The invention is a saddle type hybrid vehicle as described in independent claim 1. The dependent claim specifies a preferred embodiment.

### BRIEF DESCRIPTION OF THE DRAWINGS

The detailed description is described with reference to the accompanying figures. The same numbers are used throughout the drawings to reference like features and components.
**Fig. 1****.** illustrates a side view of an exemplary two-wheeled vehicle.
**Fig. 2****.** illustrates a top view of the present subject matter.
**Fig. 3** illustrates a side perspective view from rear side of the present subject matter.
**Fig. 4** illustrates a side perspective view from front side of the present subject matter.
**Fig.5** illustrates a flow chart depicting various components of the vehicle supported by low voltage wire harness and high voltage wire harness.

### DETAILED DESCRIPTION

As the motorcycle gets older, the electrical component demands repairs and sometimes complete replacement. Several factors may add to it like vibrations during riding condition may cause wires to break or cause friction especially at the location where the connectors are present because of constant stress in the connector region. Replacing a wire or a connector may be repaired or replaced quite easily for any specific problem but if the connector connects a bunch of wire connecting number of parts then all the wires needs replacement as picking out individually from many wires is impractical and costly.

In case of electric vehicle or the hybrid vehicle the additional wire harnesses are installed in together with existing wire harness. The number of wires significantly increases because of the electric vehicle and number of connectors connected to the electric wires also increases significantly. Also, typically vehicles with electric power train tend to carry energy source which can be vulnerable to safety risk of explosion, inflammable reaction, etc. The wiring harness of such vehicles also tend to carry high voltage current which also increases the risk of accidental fire hazard etc. owing to possibility of wire melting, shortage, electromagnetic interference etc. Often vehicles have electrical loads & system which need different power inputs thereby leading to wiring harness carrying different voltages at various times. It is a challenge to route all such wiring harness in a vehicle while ensuring safety from all above outlined potential risks. There also exists a limitation of routing the wiring harness adequately being protected from mud, water, etc as well as tampering. The overall width of the vehicle as well as the layout packaging requirements further constraint the flexibility of routing wiring harness for the vehicle especially for a saddle type vehicle. Excessive dimensions like more width of the vehicle is detrimental to the comfort, ergonomics, stability as well as handling & manoeuvrability.

In vehicle with electric power train, typically there are plurality of batteries which drive the wheel either through suitable motor-transmission system or with a mounted hub traction motor. Along with that the pluralities of batteries supply current to all electrical loads. In order to drive all the electrical loads, DC-DC convertor and RR unit is used to convert high voltage direct current into low voltage direct current and converting AC to DC current respectively. Typically, the battery is placed under the floorboard; while the controller and the junction box are placed under the seat. Typically, a Traction motor is mounted on the hub of the rear wheel whereas the starter motor is mounted on the engine and the on board charger may be mounted on the front axle fork.

The power system with high voltage wiring harness assembly includes a power source like a battery, a motor disposed on the hub of the rear wheel a motor controller set, an on board charger to charge the battery, a starter motor mounted on the engine of the vehicle and junction box which comprises different fuses and relays. The power transmission line from battery to motor, a power transmission line between the motor and the motor controller set, battery and the motor controller. The power transmission lines, although, are coated with a protecting layer. High - voltage wiring harness has become paramount part for the operation of vehicle with electric power train. Any effect of high voltage may affect the overall performance of the vehicle. The high-voltage wiring harness is required for the transmission of high-voltage direct current from the battery to other parts like motor, motor controller and high voltage three-phase alternating current from the engine to the battery, for starter motor, junction box consisting relays and fuses and also the on board charger to charge the battery from the main supply line. In case of a pure IC engine type vehicle, the starter motor may be an electrical machine like an ISG (Integrated Starter Generator) machine carrying significant voltage current.

Other than the high-voltage system in the vehicle there are systems, which sustain on low voltages to operate. An instrument cluster, control switches, a horn, a beeper, lighting loads, side stand switch, FSU (Fuel sender unit), a diagnostic port, throttle mounted TPS and a hall sensor are a low voltage systems common for Electric mode and engine mode in a hybrid electric vehicle. And electrical parts like TCI, magneto, RR unit, solenoid, carburettor mounted on the TPS are also low voltage systems but these are only required for the engine mode in a hybrid electric vehicle. Thus vehicle can contain low & high voltage transmission wiring harness lines.

During the wire harnessing of the low voltage transmission lines and the high voltage transmission lines, together, in a singular module if any of the coupler fails or any of the terminals in the wiring harness fails then the entire wire harness needs to be changed which increases the cost of service and the cost of replacement of parts which are already in working condition.

If the low voltage transmission line and the high voltage transmission line are integrated together then the electromagnetic waves produced from the high voltage transmission line causes interference in the functioning of the devices which runs on low-voltage transmission lines. The devices and electronic system working on the low-voltage power transmission line are highly susceptible to any kind of electromagnetic interference or electromagnetic fluctuation. Electromagnetic interference can influence the existing circuit of the vehicle which, as a result, may affect the vehicle functioning.

Hence, the object of the present subject matter is to solve the problem of electromagnetic wave interference created by the high voltage transmission line which affects the functioning of the electrical components depending on low voltage transmission lines.

Another embodiment of the present subject matter is to eliminate single modular wiring harness structure carrying both high voltage and low voltage wires, together, and introducing multiple modular wiring harness structure which helps in preventing the improper functioning of the electrical components powered by the low voltage transmission lines.

Yet another embodiment of the present subject matter is to provide a separate wiring harness structure for the high voltage transmission lines and a separate wiring harness structure for the low voltage transmission lines to provide multi-modular wiring harness structure instead of single modular wire harness structure to eliminate the problem of electromagnetic interference of the high voltage wiring harness on low voltage wiring harness.

In another embodiment of the present subject matter is to provide a multiple-modular wiring harness structure comprising a high voltage transmission line, a low voltage transmission line, an engine transmission line, a battery transmission line and a traction / ISG motor transmission line.

In yet another embodiment of the present subject matter is to provide a controller which acts as a link between different multi-modular harness structure comprising the high voltage transmission line, the low voltage transmission line, an engine transmission line, a battery transmission line and a traction motor transmission line. Thus, eliminating any contact or any need for establishment of direct link between the high voltage transmission line and the low voltage transmission line through any wire harness thereby saving cost and material.

In another embodiment of the present subject matter is to provide a starter motor / ISG which functions using the controller depending on the basis of the throttle input and eliminating the manual assistance or providing a separate switch in order to actuate the motor.

In yet another embodiment of the present invention is to provide a multi modular wiring harness structure which improves the serviceability and also improving the ease of assembly of the wire of each component without removing the entire set of connectors.

In another embodiment of the present subject matter is to provide a traction motor mounted on the hub of the rear wheel based on the two parameters that is the throttle input and the hall sensor input. The present subject matter along with all the accompanying embodiments and their advantages would be described in greater detail in conjunction with the figures in the following paragraphs

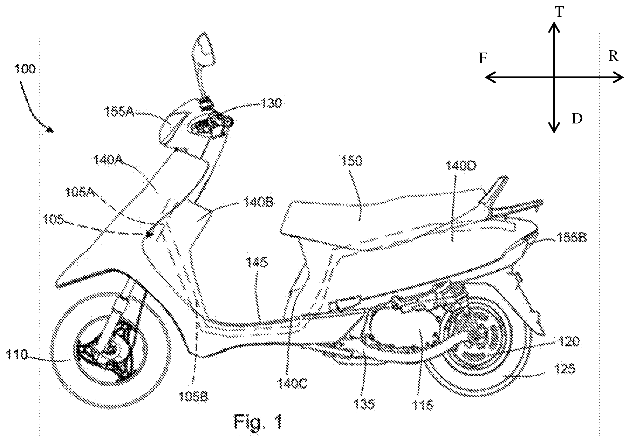

Fig. 1 illustrates a left side view of an exemplary motor vehicle (100), in accordance with an embodiment of the present subject matter. For the purposes of this invention two-wheeled vehicle (100) as illustrated in Figure 1 is interchangeably used as two or three wheeled saddle type vehicle (100) for the rest of the application, wherein both the terms convey the same meaning

The vehicle (100) illustrated, has a frame member (105). In the present embodiment, the frame member (105) is step-through type including a head tube (105A), and a main frame (105B) that extend rearwardly downward from an anterior portion of the head tube (105A). The main frame (105B) extends inclinedly rearward to a rear portion of the vehicle (100).

The vehicle (100) includes prime movers that are connected to the frame member (105). In the present implementation, one of the prime movers is an internal combustion (IC) engine (115) mounted to the frame member (105). In the depicted embodiment, the IC engine (115) is mounted to a structural member (135) that is pivoted to the frame member (105). In one embodiment, the structural member (135) is a rigid member made including metal. The vehicle (100) also includes another prime mover, which is an electric motor (120). In a preferred embodiment, the electric motor (120) is hub mounted to one wheel of the vehicle (100). In another embodiment, more than one electric motor is mounted to wheels of the vehicle. In the depicted embodiment, the vehicle (100) includes at least two-wheels and the electric motor (120) is hub mounted to the rear wheel (125) of the vehicle. A front wheel (110) is rotatably supported by the frame member (105) and is connected to a handle bar assembly (130) that enables maneuvering of the vehicle (100).

Further, the vehicle (100) includes a high capacity on-board battery (not shown) that drives the electric motor (120). The high capacity battery may include one or more high capacity battery packs or one or more low capacity cells. The high capacity battery can be disposed at a front portion, a rear portion, or at the center of the vehicle (100). The high capacity battery is supported by the frame member (105) and the vehicle (100) includes plurality of body panels, mounted to the frame member (105) for covering various components of the vehicle (100). The plurality of panels includes a front panel (140A), a leg shield (140B), an under-seat cover (140C), and a left and a right-side panel (140D). A glove box may be mounted to a leg shield (140B).

A floorboard (145) is provided at the step-through portion defined by the main tube (105B). A seat assembly (150) is disposed rearward to the step-through portion and is mounted to the main frame (105B). The seat assembly (150) that is elongated in a longitudinal direction F-R of the vehicle (100) enables the user to operate the vehicle in a saddle ride-type posture. One or more suspension(s) connect the wheels (110), (125) to the vehicle (100) and provide a comfortable ride. The vehicle (100) comprises of plurality of electrical and electronic components including a headlight (155A), a taillight (155B), a starter motor (not shown), a horn etc. Also, the vehicle (100) includes a master control unit (not shown) that takes control of the overall operation of the vehicle (100) including the function of the IC engine (115), the electric motor (120), charging of the batteries from a magneto/integrated starter generator (ISG), driving of loads by the magneto/ISG, charging of the high capacity batteries by the electric motor operating in generator mode, and any other operations associated with the operation of the vehicle (100). The vehicle (100) shown in fig. 1 is an exemplary vehicle and the present subject matter can be used in a two-wheeled vehicle of hybrid type.

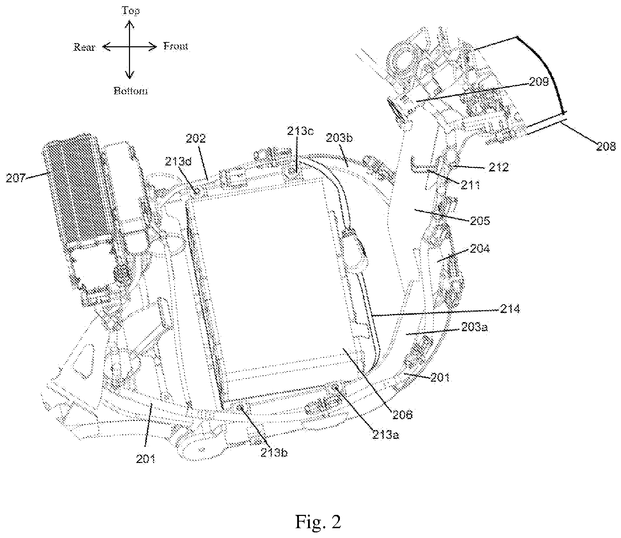

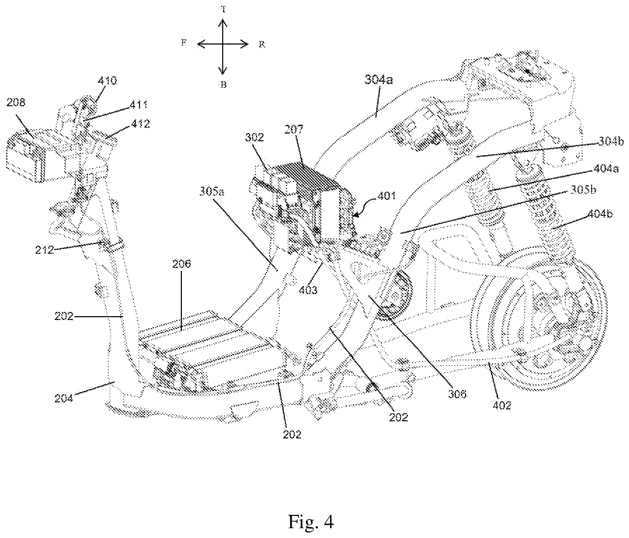

**Fig. 2** illustrates the wire harness of the entire two-wheeled vehicle. The wires used in the vehicle are bunched in modular form, forming multiple wire harness modules depending on the basis of the voltage supply. The entire wiring of the vehicle is bunched on the basis of high voltage and low voltage. The high voltage wire harness (202) comprises wires to supply power to a starter motor (not shown) from battery (206) through starter relay, then, from the battery (206) to the controller (207) via relay (provided in a junction box), a wire from the charging socket (410) (refer fig.4) which charges the battery (206), from battery (206) to the traction motor to run the vehicle (100) in IC engine mode or electric or economy mode. As per an embodiment, the high voltage wire harness (202) is capable of withstanding a voltage of 48 Volt.

When viewed from the front portion of the vehicle, the right hand side of the vehicle guides the high voltage wire harness (202) which originates from the ignition lock (209) and the left hand side of the vehicle guides low voltage wire harness (201). The high voltage wire harness (202) moves down along the down tube (205). Both low voltage wire harness (201) and high voltage wire harness (202) receives support from the down tube (205) by providing a cord support structure (211) which is firmly affixed on the down tube (205). A hose clip (212) binds the wire harnesses with the cord support structure (211). The down tube (205) bifurcates into a left hand side floor tube (203a) and right hand side floor tube (203b). Both the floor tubes (203a, 203b) are fixedly attached to the down tube (205) by a cross member (204) such that at least a portion of the front part of the floor tubes (203a,203b) are covered by the cross member located on both sides of the down tube (205) of the vehicle. The floor tubes (203a,203b) provides required support to the battery (206). The battery (206) is removably mounted on the floor tubes(203a,203b) using fastening means (213a,213b,213c,213d). The high voltage wire harness (202), then moves upwards in the direction of a controller (207) electrically connected using a coupler. The controller (207) provides the interface between the high voltage wire harness (202) and low voltage wire harness (201). The left hand side of the vehicle guides the low voltage wire harness (201) along the down tube (205) and subsequently along the left hand side floor tube (203b) and gets electrically connected to the controller (207) through a junction box provided with plurality of relays and further proceeds towards the rear portion of the vehicle (100). The high voltage wire harness (202) connects the ignition lock (209) with the controller (207) for the functioning of the ignition system. A charging socket (410) is connected to the high voltage wire harness (202) for the purpose of charging the battery (206). A battery charger (208) is provided on the front portion of the vehicle located immediately located behind the ignition lock (209).

The vehicle requires low voltage wire harness (201) to provide power supply to low load components like speedometer, horn beeper, lighting loads such as headlamp, tail lamp, turn signal lamp, switches like side stand switch, fuel sender unit to measure and display the level of fuel left in the vehicle, diagnostic port to diagnose the vehicle for proper functioning and to detect any hidden fault, sensors for different purpose like hall sensor in order to start the traction motor.

The controller (207) provides an interacting interface for the low voltage wire harness (201) and high voltage wire harness (202) without directly connecting any low voltage wire and a high voltage wire, electrically, due to which the electromagnetic interference created by any high voltage wires reduces and also this arrangement reduces the probability of wire melting or wire shorting problem between high voltage system and low voltage system. Both low voltage wire harness (201) and high voltage wire harness (202) are kept farthest from each other by arranging high voltage wire harness (202) on one side of the vehicle and the low voltage wire harness (201) on the other side of the vehicle.

The battery (206) provides the necessary power in order to run most of the electrical loads installed in the two-wheeled vehicle. When the vehicle (100) is operating in hybrid or ISG mode the battery (206) provides the electric current to the traction / ISG motor by first converting it into alternating current with the aid of an inverter. The battery (206) installed in the vehicle powers the load and provides high voltage. The voltage received from the battery can be 48 Volt or more. So, the high voltage from the battery (206) is stepped down essentially for the proper functioning of the low electrical loads like lighting loads (rear lamp assembly and head lamp assembly), horn, beeper, starter relay etc.

The battery (206) in the Fig.2 provides power supply to the traction motor and the starter motor. The starter motor is operated by the controller (207) and thus eliminates the requirement of a separate switch of 12V in order to actuate the starter motor. The controller (207) checks for the change in the throttle position to operate the starter motor. The throttle position related data is sent from the throttle position sensor to the controller (207). The controller (207) signals the battery to start the starter motor / ISG and responding to the controller's (207) instruction the battery provides 48V supply to the starter relay. The 12V received from the controller (207) eliminates the requirement of separate installation of ignition switch to provide low current to the starter relay and the controller (207) provides the low current of 12V to the starter relay which causes the starter solenoid to close a pair of contacts which, as a result, triggers the flow of large current at 48 V from the battery to be supplied to the starter relay and actuates the starter motor and eventually sets the engine into motion.

Whereas the traction motor gets actuated on the bases of the throttle input as well as hall sensor input. For both starter motor as well as the traction motor the process of actuation and operation is programmed and stored in the controller's memory. Thus reducing the number of hardware for the operation of the vehicle and then bringing down the cost of manufacture and ease in serviceability.

Battery wire harness (214) is branched out from the high voltage wire harness (202). The battery wire harness (214) connects with the battery charger (208) with the battery (206). The battery wire harness (214) provides power supply to the traction motor and the starter motor and also powers the low loads after stepping down the voltage through DC-DC convertor.

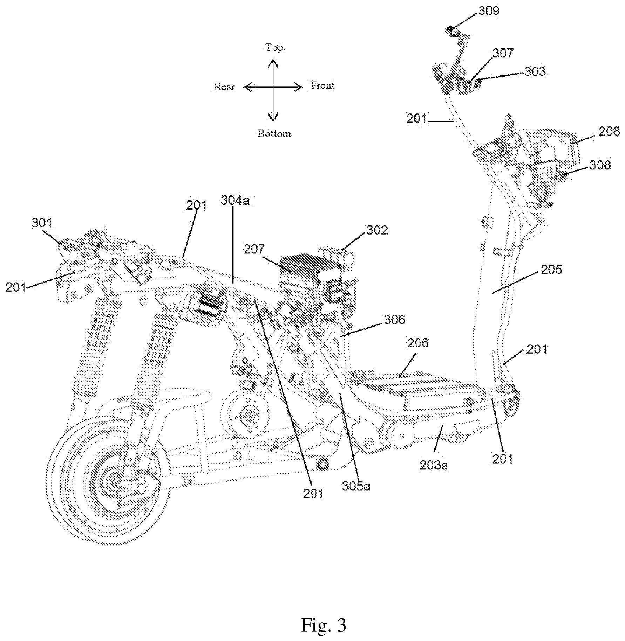

**Fig.3** illustrates the low voltage wire harness (201) which supports loads running on low voltage (~12V). The low voltage wire harness (201) is given on the side opposite of the high voltage wire harness (202). The low voltage wire harness (201) connects all the loads which operates on 12V or less. The low voltage wire harness (201) extends from the speedometer coupler (309) then moves in downward direction to the control switches coupler (to connect the turn signal lamp switch, beam switch), further to the headlamp coupler (308) till the tail lamp coupler (301) to connect the tail lamp (155B) provided on the rear most portion of the vehicle. The low voltage wire harness (201) moves along the down tube and proceed along the left side floor tube (203a) and then extending along a left hand side transition tube (305a) and then finally along a left hand side upper rear tube(304a) in order to terminate at the tail lamp coupler (301). The low voltage wire harness (201) connects all the low loads to the battery (206) through the junction box (302) comprising plurality of relays and also to the controller (207) in order to control the low loads The controller (207) and the junction box (302) are mounted on the supporting bracket (306) mounted on the left hand side transition tube (305a) and the right hand side transition tube (305b) (refer Fig.4).

**Fig.4** illustrates the high voltage wire harness (202) which connects the charging socket (410) provided with a battery charger (208) and then the high voltage wire harness (202) extends along the down tube (205) of the vehicle. The high voltage wire harness (202) is provided with support with the help of hose clips (212) which is clipped against the down tube (205) to prevent the high voltage wire harness (202) from moving around or interfering with any other component of the vehicle during any jerk or any movement such as vibration because of the vehicular movement. The charging socket (410) is disposed adjacent to a head tube (412). A side support structure (411) provides necessary support to the charging socket (410) and also the side support structure (411) is fixedly attached to the head tube (412).

The down tube (205) of the vehicle is fixedly attached to a pair of floor tubes (203a, 203b), a left hand side floor tube (203a) and a right hand side floor tube (203b). A portion of both the left side floor tube (203a) and the right side floor tube (203b) are connected to the down tube (205) with the help of the cross member (204). Both the floor tubes (203a, 203b) are providing support to the battery (206). Also, the floor tubes (203a, 203b) provide ease in routing the wire harness towards the controller (207) and the junction box (302). The high voltage wire harness (202) is routed along the left hand side floor tube (203b) and then moving upwards in the rear direction of the vehicle along the left hand side transition tube (305b) to connect with the controller (207) though the junction box (302). The junction box (302) encloses all the connectors through which all the wiring of the vehicle draws power supply. The controller (207) provides plurality of controller power lines (401) such as a pair of direct current lines from battery to the input loads, three alternate current lines between the output load and the traction motor. A traction motor wire harness (402) of high voltage connects the junction box (302) with a traction motor. Further, an engine wire harness (403) provides connection to the engine ignition coil to control the functioning of an engine.

Further, the floor tubes (203a,203b) extends in an upward direction rearwardly to form upper rear tubes (304a,304b). The pair of upper rear tubes (304a,304b) forms a left side upper rear tube (304a) and a right side upper rear tube (304b) together supporting a seat member (not shown). The upper rear tubes (304a, 304b) also accommodates a plurality of shock absorbers (404a,404b) on each side of the vehicle. A supporting bracket (306) is adapted on both the transition rear tubes (405a,405b) to provide rigidity to the upper rear tubes (304a, 304b) and the supporting bracket (306) also enables mounting of the controller (207) and the junction box (302) where all the wires are configured with the controller (207) to provide an interface between the low voltage wire harness (201) and the high voltage wire harness (202) for the functioning of the vehicle.

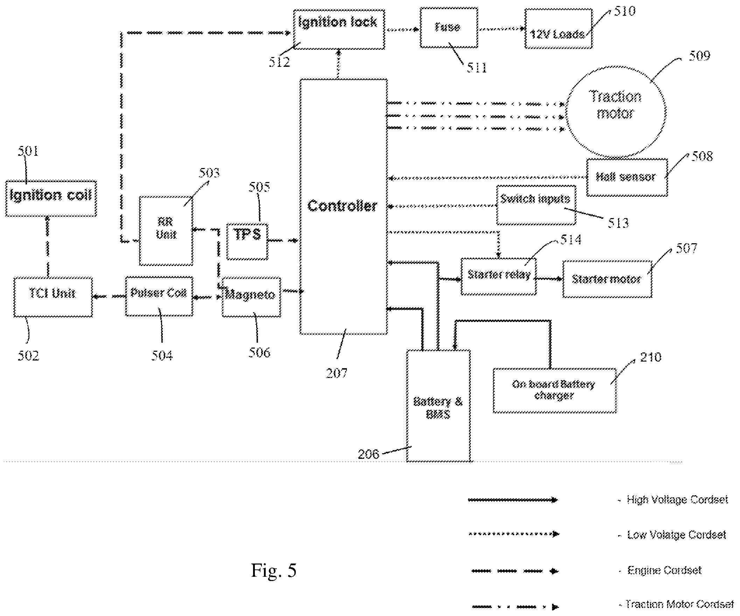

**Fig. 5** illustrates the interface between the low voltage wire harness (201) and high voltage wire harness (202) through a controller (207). The high voltage wire harness (202) connects the battery (206), charging socket (410), starter motor (507) with a starter relay (514), an ignition coil (501) through TCI unit (502), pulser coil (504) and a magneto (506), magneto (506) to the ignition lock (512) through regulator-rectifier unit (or R-R unit) (503) and throttle position sensor (TPS) (505). Additionally, the high voltage wire harness (202) connects the traction motor (509) to the controller (207) of a hybrid vehicle.

The low voltage wire harness (201) connects loads (510) which require low voltage (~12V). The low voltage wire harness (201) connects the hall sensor (508), inputs switches (513) like side stand switch, horn switch, a beeper etc.

Many modifications and variations are possible in the light of above disclosure. However, the scope of the invention is defined by the appended claims.

## Claims

1. A saddle type vehicle (100) comprising:
a head tube (412);
a charging socket (410) disposed adjacent to said head tube (412);
a side support structure (411) fixedly attached to said head tube (412) and providing support to said charging socket (410);
a downtube (205) running away from said head tube (412) in a downward direction;
a plurality of floor tubes (203a,203b) fixedly attached to said downtube (205) by a cross-member (204), said floor tubes (203a,203b) providing support to a floor board (145);
a power source (206) securely disposed on at least a portion of said floor tubes (203a,203b) through a plurality of means (213a,213b,213c,213d); and
a wire harness system comprising a plurality of wire harness modules routed along said floor tubes (203a,203b) provided on both sides of said vehicle (100),
wherein said wire harness modules are coupled to a controller (207),
wherein said wire harness modules comprise a high voltage wire harness (202), a low voltage wire harness (201), a battery wire harness (214) and a traction motor harness (402), and
wherein the controller (207) provides an interacting interface for the low voltage wire harness (201) and high voltage wire harness (202) without directly connecting any low voltage wire and high voltage wire, electrically, to reduce the electromagnetic interference created by any high voltage wires and to reduce the probability of wire melting or wire shorting problem between the high voltage system and the low voltage system, **characterized in that** the vehicle (100) is a saddle type hybrid vehicle (100), further comprising an engine wire harness (403), and
wherein the low voltage wire harness (201)
and high voltage wire harness (202) are kept farthest from each other by arranging the high voltage wire harness (202) on one side of the vehicle (100) and the low voltage wire harness (201) on the other side of the vehicle (100).

2. The saddle type hybrid vehicle (100) as claimed in claim 1, wherein said high voltage wire harness (202) is routed along a right side of said saddle type vehicle (100), and said low voltage wire harness (201) is routed along a left side of said saddle type hybrid vehicle (100).

## Patentansprüche

1. Fahrzeug (100) vom Satteltyp, umfassend:
ein Steuerrohr (412);
eine Ladeanschlussbuchse (410), die benachbart zu dem Steuerrohr (412) angeordnet ist;
eine seitliche Stützkonstruktion (411), die fest an dem Steuerrohr (412) befestigt ist und der Ladeanschlussbuchse (410) Halt bietet;
ein Unterrohr (205), das vom Steuerrohr (412) in Abwärtsrichtung verläuft;
eine Vielzahl von Bodenrohren (203a, 203b), die über einen Querstreben (204) fest mit dem Unterrohr (205) verbunden sind, wobei die Bodenrohre (203a, 203b) eine Bodenplatte (145) abstützen;
eine Stromquelle (206), die mittels einer Vielzahl von Befestigungsmitteln (213a, 213b, 213c, 213d) sicher an mindestens einem Abschnitt der genannten Bodenrohre (203a, 203b) angeordnet ist; und
ein Kabelbaumsystem, das eine Vielzahl von Kabelbaummodulen umfasst, die entlang der genannten Bodenrohre (203a, 203b) verlegt sind, die auf beiden Seiten des genannten Fahrzeugs (100) vorgesehen sind,
wobei die genannten Kabelbaummodule mit einer Steuerung (207) verbunden sind,
wobei die genannten Kabelbaummodule einen Hochspannungskabelbaum (202), einen Niederspannungskabelbaum (201), einen Batterie-Kabelbaum (214) und einen Antriebsmotor-Kabelbaum (402) umfassen, und
wobei die Steuereinheit (207) eine Schnittstelle für den Niederspannungskabelbaum (201) und den Hochspannungskabelbaum (202) bereitstellt, ohne Niederspannungs- und
Hochspannungskabel direkt miteinander zu verbinden, um die durch Hochspannungskabel verursachten elektromagnetischen Störungen zu verringern und die Wahrscheinlichkeit von Kabelschmelz- oder Kurzschlussproblemen zwischen dem Hochspannungssystem und dem Niederspannungssystem zu verringern, **dadurch gekennzeichnet, dass** das Fahrzeug (100) ein Hybridfahrzeug vom Satteltyp (100) ist, das ferner einen Motor-Kabelbaum (403) umfasst, und
wobei der Niederspannungskabelbaum (201) und der Hochspannungskabelbaum (202) so weit wie möglich voneinander entfernt gehalten werden, indem der Hochspannungskabelbaum (202) auf einer Seite des Fahrzeugs (100) und der Niederspannungskabelbaum (201) auf der anderen Seite des Fahrzeugs (100) angeordnet werden.

2. Hybridfahrzeug (100) vom Satteltyp nach Anspruch 1, wobei der Hochspannungskabelbaum (202) entlang einer rechten Seite des Hybridfahrzeugs vom Satteltyp (100) verlegt ist und der Niederspannungskabelbaum (201) entlang einer linken Seite des Hybridfahrzeugs vom Satteltyp (100) verlegt ist.

## Revendications

1. Véhicule de type selle (100) comprenant :
un tube de direction (412) ;
une prise de recharge (410) disposée à proximité dudit tube de direction (412) ;
une structure de support latérale (411) fixée de manière rigide audit tube de direction (412) et assurant le support de ladite prise de recharge (410) ;
un tube diagonal (205) s'étendant à partir dudit tube de direction (412) vers le bas ;
une pluralité de tubes de plancher (203a, 203b) fixés de manière rigide audit tube diagonal (205) par une traverse (204), lesdits tubes de plancher (203a, 203b) assurant le support d'un plancher (145) ;
une source d'alimentation (206) solidement disposée sur au moins une partie desdits tubes de plancher (203a, 203b) par l'intermédiaire d'une pluralité de moyens (213a, 213b, 213c, 213d) ; et
un système de faisceaux de câbles comprenant une pluralité de modules de faisceaux de câbles acheminés le long desdits tubes de plancher (203a, 203b) prévus des deux côtés dudit véhicule (100),
dans lequel lesdits modules de faisceaux de câbles sont couplés à un contrôleur (207),
dans lequel lesdits modules de faisceaux de câbles comprennent un faisceau de câbles haute tension (202), un faisceau de câbles basse tension (201), un faisceau de câbles de batterie (214) et un faisceau de câbles de moteur de traction (402), et
dans lequel le contrôleur (207) fournit une interface d'interaction entre le faisceau de câbles basse tension (201) et le faisceau de câbles haute tension (202) sans relier directement aucun câble basse tension à aucun câble haute tension, afin de réduire les interférences électromagnétiques générées par les fils haute tension et de réduire le risque de fusion ou de court-circuit entre le système haute tension et le système basse tension, **caractérisé en ce que** le véhicule (100) est un véhicule hybride de type selle (100), comprenant en outre un faisceau de câbles moteur (403), et
dans lequel le faisceau de câbles basse tension (201) et le faisceau de câbles haute tension (202) sont maintenus aussi éloignés que possible l'un de l'autre en disposant le faisceau de câbles haute tension (202) d'un côté du véhicule (100) et le faisceau de câbles basse tension (201) de l'autre côté du véhicule (100).

2. Véhicule hybride de type selle (100) selon la revendication 1, dans lequel ledit faisceau de câbles haute tension (202) est acheminé le long d'un côté droit dudit véhicule de type selle (100), et ledit faisceau de câbles basse tension (201) est acheminé le long d'un côté gauche dudit véhicule hybride de type selle (100).
